# EUROPÄISCHE PATENTSCHRIFT

(11) **EP 0 633 235 B1**
(45) Veröffentlichungstag und Bekanntmachung des Hinweises auf die Patenterteilung: **11.11.1998**
(21) Anmeldenummer: 94109916.0
(22) Anmeldetag: 27.06.1994
(51) Int. Cl.: C05F 17/02, C05F 17/00

(54) **Verfahren und Vorrichtung zur Kompostierung von organischen Stoffen, insbesondere Abfällen**
Composting process and device for organic matter, especially wastes
Procédé et appareil de compostage de matériaux organiques en particulier des déchets

(30) Priorität: 07.07.1993 DE 4322688
(43) Veröffentlichungstag der Anmeldung: 11.01.1995
(73) Patentinhaber: HERHOF UMWELTTECHNIK GMBH, D-35606 Solms (DE)
(72) Erfinder: Schnorr, Karl-Ernst, D-35633 Lahnau (DE)
(74) Vertreter: Zinnecker, Armin, Dipl.-Ing.

(56) Entgegenhaltungen:
- EP-A- 0 296 645
- EP-A- 0 458 136
- DE-A- 4 107 340
- FR-A- 2 323 641

## Beschreibung

Die Erfindung betrifft ein Verfahren zur Kompostierung von organischen Stoffen (Rottegut), insbesondere Abfällen, beispielsweise Hausmüll oder hausmüllähnlichen Abfällen, bei dem das Rottegut in einen geschlossenen Behälter eingebracht wird und unter Zuführung von Sauerstoff mikrobiell abgebaut wird, wobei ferner dem Rottegut ein Gemisch aus reinem Sauerstoff und Abluft zugeführt wird, und eine Vorrichtung zur Durchführung eines derartigen Verfahrens.

Ein Verfahren zur Kompostierung von organischen Stoffen, insbesondere Abfällen, beispielsweise Hausmüll oder hausmüllähnlichen Abfällen, bei dem das Rottegut in einen geschlossenen Behälter eingebracht wird und unter Zuführung von Sauerstoff mikrobiell abgebaut wird, ist aus der DE-PS 36 37 393, bekannt. Bei dem vorbekannten Verfahren werden Hausmüll oder hausmüllähnliche Abfälle in einen geschlossenen Behälter eingebracht und dann durch eine dem mikrobiellen Wachstum angepaßte Luftzuführung ohne Bewegung der Abfälle abgebaut. In dem Behälter sind luftdurchlässige Bodenplatten vorhanden, unter denen sich ein Zuluftkanal befindet. Im oberen Bereich des Behälters ist eine Abluftöffnung vorhanden. Dem auf den Bodenplatten liegenden Rottegut wird von unten Frischluft zugeführt. Zu diesem Zweck sind in dem Kanal unter den Bodenplatten Ventilatoren vorgesehen. Die oben aus dem Rottegut austretende Abluft, in der CO₂ und Wasser enthalten ist, wird durch die Abluftöffnung abgeführt. Anschließend wird diese Abluft gefiltert und gereinigt.

Bei dem vorbekannten Verfahren wird gewöhnliche Luft durch das Rottegut geleitet. Neben dem für den Rottevorgang erforderlichem Sauerstoff wird auch eine erhebliche Menge Stickstoff durch das Rottegut hindurchgeleitet, so daß auch eine sehr große abzuführende Abluftmenge entsteht. Hierdurch muß die zu installierende und zu betreibende Gebläseleistung sehr hoch sein. Ferner fällt eine große Menge Abluft an, die in die Atmosphäre abgegeben wird und die vorher gefiltert und gereinigt werden muß, damit keine oder nur eine sehr geringe Umweltbelastung, insbesondere Geruchsbelästigung, auftritt.

Um die Gebläseleistung vermindern zu können, ist bereits vorgeschlagen worden, mit reinem Sauerstoff zu arbeiten. Danach wird dem Rottegut nicht Luft mit einem Sauerstoffgehalt von etwa 21 % zugeführt, sondern reiner Sauerstoff. Es hat sich jedoch gezeigt, daß sich dann die strömungstechnischen Gegebenheiten nachteilig verändern können. Ferner ist der reine Sauerstoff verhältnismäßig teuer, so daß das Verfahren bei der ausschließlichen Verwendung von reinem Sauerstoff nicht wirtschaftlich ist.

Hiervon ausgehend wird in der DE-OS 41 07 340, ein Verfahren der eingangs angegeben Art, also ein Verfahren nach dem Oberbegriff des Anspruchs 1, vorgeschlagen. Dementsprechend wird dem Rottegut ein Gemisch aus reinem Sauerstoff und Abluft zugeführt.

Ferner wird in der DE-OS 41 07 340 vorgeschlagen, aus der aus dem Rottegut austretenden Abluft das darin befindliche CO₂ und Wasser abzuscheiden.

Dadurch, daß dem Rottegut ein Gemisch aus reinem Sauerstoff und Abluft zugeführt wird, vermindert sich die durch das Rottegut hindurchzuschleusende Gasmenge erheblich. Während nach der DE-PS 36 37 393 ausschließlich mit Frischluft gearbeitet wurde, wird nach der DE-OS 41 07 340 die Abluft teilweise oder ganz im Kreislauf geführt und wird reiner Sauerstoff zudosiert, so daß sich die durch das Rottegut hindurchzuschleusende Gasmenge im Vergleich zum Verfahren nach der DE-PS 36 37 393 erheblich vermindert. Dies bringt den Vorteil mit sich, daß die zu installierende Gebläseleistung geringer sein kann. Auch die Betriebskosten für die Gebläse vermindern sich. Mit dem Verfahren nach der DE-OS 41 07 340 kann also gegenüber dem Verfahren nach der DE-PS 36 37 393 eine ganz erhebliche Energieeinsparung erreicht werden. Ferner kann auch eine erhebliche Einsparung bei dem für die Filterung der Abluft erforderlichen Aufwand erreicht werden.

Nach der Lehre der DE-OS 41 07 340 wird dem reinen Sauerstoff aus strömungstechnischen Gründen Trägerluft hinzugemischt. Diese Trägerluft besteht aus der das Rottegut verlassenden Abluft. Diese Trägerluft wird dementsprechend im Kreislauf geführt. Die das Rottegut verlassende Abluft wird - zusammen mit reinem Sauerstoff - dem Rottegut wieder zugeführt. Dies erfolgt am besten in der aus der DE-PS 36 37 393 an sich bekannten Weise, also dadurch, daß das Sauerstoff-Abluft-Gemisch dem Rottegut von unten zugeführt wird und daß die das Rottegut verlassende Abluft an der Oberseite des Rottegutes abgeführt wird.

Nach der DE-OS 41 07 340 wird die Menge der im Kreislauf geführten Luft derart bemessen, daß unter strömungstechnischen Gesichtspunkten zufriedenstellende Ergebnisse erreicht werden können. Die im Kreislauf geführte Umluft wird möglichst gering bemessen, allerdings so groß, daß sich eine einwandfreie Durchströmung und insbesondere ein einwandfreier Abtransport des im Rottegut entstehenden CO₂ ergeben.

Aus der DE-OS 40 34 400 ist ein Verfahren zur biotechnologischen Behandlung eines Reststoffgemenges bekannt, bei dem das Reststoffgemenge durch einen mikrobiellen Umsetzungsprozeß in einem geschlossenen System zur Herstellung von Kompost bearbeitet wird. Das Reststoffgemenge wird in dem geschlossenen System durch eine Trommel durchmischt. Nach einer vorteilhaften Weiterbildung kann dem geschlossenen System zeitweise eine definierte Menge von Frischluft (Außenluft), reinem Sauerstoff oder reinem Kohlendioxid zugeführt werden und eine korrespondierende Abluftmenge abgeführt werden, vorzugsweise über einen Biofilter.

Aus der EP-A-296 645 ist ein Verfahren zum Kompostieren bekannt, das in einem geschlossenen Behälter durchgeführt wird. Dem Rottegut wird Frischluft zugeführt. Die mit Wärme und Feuchtigkeit beladene Abluft wird abgeführt. Um eine Schadstoffbelastung und Geruchsbelastung zu vermeiden wird die Abluft gekühlt, so daß die Feuchtigkeit auskondensiert. Die Abluft wird anschließend mit Umgebungstemperatur und ohne Feuchtigkeit in die Athmosphäre abgeleitet.

Aus der EP-A-458 136 ist ein Verfahren zur Kompostierung bekannt, bei dem das Rottegut in einem geschlossenen Behälter unter Luftzuführung mikrobiell abgebaut wird. Um die Kompostierung schnell und zuverlässig in Gang bringen zu können, wird während der Anfahrphase die aus dem Rottegut austretende Abluft dem Rottegut erneut zugeführt.

Aufgabe der Erfindung ist es, das eingangs angegebene Verfahren zu verbessern.

Erfindungsgemäß wird diese Aufgabe dadurch gelöst, daß das in der Abluft befindliche CO₂ dem Rottegut erneut zugeführt wird und daß aus der aus dem Rottegut austretenden Abluft das darin befindliche Wasser durch Abkühlung und Kondensation abgeschieden wird. Nach der Lehre der DE-OS 41 07 340 wird das CO₂, das sich in der aus dem Rottegut austretenden Abluft befindet, abgeschieden. Dies geschieht nach der Lehre der DE-OS 41 07 340 deshalb, damit sich dieses CO₂ in der im Kreislauf geführten Trägerluft nicht immer mehr anreichert. Nach den in der DE-OS 41 07 340 zum Ausdruck kommenden, früheren Vorstellungen muß das CO₂ aus der im Kreislauf geführten Trägerluft entfernt werden. Überraschend hat sich jedoch gezeigt, daß dies entgegen der bisher herrschenden Überzeugung nicht erforderlich ist. Dies bringt den Vorteil mit sich, daß der mit der Entfernung des CO₂ aus der Abluft verbundene Aufwand nach dem erfindungsgemäßen Verfahren eingespart werden kann.

Ferner lag den bisherigen Vorstellungen die Auffassung zugrunde, daß sich bei einem immer höheren CO₂-Gehalt die Atmosphäre für die Mikroorganismen, die die Kompostierung bewirken, verschlechtert, was wiederum zur Folge hat, daß diese die Kompostierung bewirkenden Mikroorganismen zunehmend schlechter und schließlich gar nicht mehr arbeiten, also die die Kompostierung bewirkenden Stoffwechselvorgänge durchführen, können. Überraschend hat sich jedoch gezeigt, daß die nach dem erfindungsgemäßen Verfahren eintretende CO₂-Anreicherung in der im Kreislauf geführten Luft bzw. in den im Kreislauf geführten Gasen die befürchteten Nachteile nicht mit sich bringt.

Die zuzuführende Menge reinen Sauerstoffs wird derart eingestellt, daß für den Rottevorgang genügend Sauerstoff vorhanden ist. Bei dem erfindungsgemäßen Verfahren muß das in dem Behälter befindliche Rottegut nicht bewegt, also nicht umgewälzt oder umgeschichtet werden. Das erfindungsgemäße Verfahren ist allerdings auch dann anwendbar, wenn eine derartige Bewegung, Umwälzung oder Umschichtung des Rotteguts stattfindet.

Aus der aus dem Rottegut austretenden Abluft wird das darin befindliche Wasser abgeschieden. Die in dem Rottegut befindliche Biomasse, die aus Kohlenstoff, Wasserstoff, Sauerstoff sowie weiteren Elementen besteht, reagiert mit dem zugeführten Sauerstoff, und zwar in der Weise, daß der Wasserstoff mit dem Sauerstoff Wasser bildet. Dieses Wasser kann dann abgeschieden werden und den Kreislauf verlassen. Im übrigen wird die Abluft bzw. Umluft im Kreislauf geführt. Mit zunehmender Zeitdauer reichert sich CO₂ in der Umluft an. Gleichwohl bleibt trotz ständiger O₂-Zufuhr die Massenbilanz in der Umluftführung konstant, da in gleichem Maße Wasser abgeführt wird. Es ist nicht erforderlich, auch noch CO₂ aus dem Kreislauf zu entfernen. Zur Aufrechterhaltung des Massengleichgewichts reicht es vielmehr aus, nur Wasser aus dem Kreislauf zu entfernen. Ferner hat sich überraschend gezeigt, daß die CO₂-Anreicherung in der Umluft nicht schadet und den Rotteprozeß nicht negativ beeinflußt. Dementsprechend ist es nicht erforderlich, CO₂ abzuführen. Es kann vielmehr das gesamte CO₂ dem Rottegut erneut zugeführt werden. In Konsequenz hierzu ist es nicht erforderlich, Abluft aus dem Kreislauf zu entfernen. Es wird lediglich Wasser aus dem Kreislauf herausgeführt, sonst nichts. Dies ermöglicht eine ganz besonders vorteilhafte und einfache Verfahrensführung. Da es keine Abluft mehr gibt, ist eine Abluftreinigung nicht mehr erforderlich.

Vorteilhafte Weiterbildungen der Erfindung sind in den Unteransprüchen beschrieben.

Vorzugsweise wird die aus dem Rottegut austretende Abluft dem Rottegut vollständig wieder zugeführt. Es findet also eine vollständige Umluftführung statt. Die gesamte das Rottegut verlassende Abluft wird - nach Entfernung des darin enthaltenen Wassers - dem Rottegut - zusammen mit reinem Sauerstoff - wieder zugeführt. Die im Kreislauf geführte Abluft ("Umluft" bzw. "Trägerluft") wird also vollständig im Kreislauf geführt.

Dies ist mit dem weiteren Vorteil verbunden, daß überhaupt keine Abluft nach außen abgeführt werden muß, wodurch wiederum auch eine Filterung der Luft nicht erforderlich ist. Der damit verbundene Aufwand wird vermieden. Umweltbelastungen, insbesondere Geruchsbelästigungen, werden bereits vom Grundsatz her vollständig vermieden.

Vorteilhaft ist es, wenn die aus dem Rottegut austretende Abluft dem Rottegut kontinuierlich wieder zugeführt wird. Die Umluftführung wird also während der gesamten Prozeßdauer durchgeführt. Es ist nicht erforderlich, die Umluftführung zu unterbrechen. Ferner ist es vorteilhaft, den Sauerstoff kontinuierlich zuzuführen. Auch die Zufuhr des Sauerstoffs wird also während der gesamten Prozeßdauer ohne Unterbrechung durchgeführt.

Nach einer weiteren vorteilhaften Weiterbildung wird die pro Zeiteinheit umgewälzte Gasmenge gesteigert, wenn die Temperatur im Rottegut ansteigt. Entsprechend ist es vorteilhaft, wenn - vice versa - die pro Zeiteinheit umgewälzte Gasmenge vermindert wird, wenn die Temperatur in dem Rottegut absinkt. Bei der umgewälzten Gasmenge handelt es sich um die Abluft, die den Behälter verläßt und die mit CO₂ und Wasser beladen ist bzw. um die Abluft, die mit CO₂ beladen ist und aus der dann das Wasser gegebenenfalls abgeschieden worden ist.

Eine weitere vorteilhafte Weiterbildung ist dadurch gekennzeichnet, daß der Feuchtigkeitsgehalt in dem umgewälzten Gas auf einem bestimmten vorgegebenen Wert konstant gehalten wird. Es hat sich gezeigt, daß das erfindungsgemäße Verfahren dann besonders gut und effektiv durchgeführt werden kann.

Vorzugsweise beträgt die Temperatur in dem Behälter bzw. in dem Rottegut mindestens 60° C. Der Rottevorgang soll nach Möglichkeit bei einer Temperatur durchgeführt werden, die so hoch ist, daß die pathogenen Keime abgetötet werden und nicht arbeiten können. Dies ist üblicherweise bei einer Temperatur von mindestens 60° C (bei einer Einwirkdauer von mindestens 12 Stunden) der Fall. Das Verfahren wird also derart geführt, daß diese Temperatur von mindestens 60° C erreicht wird. Dann findet der Abbau der organischen Stoffe durch thermophile Mikroorganismen, beispielsweise Actinomyceten, statt, was sich als vorteilhaft herausgestellt hat. Üblicherweise beträgt die Temperatur in dem Behälter bzw. in dem Rottegut zwischen 60° C und 80° C. Dieser Temperaturbereich soll aufrechterhalten werden.

Nach einer weiteren vorteilhaften Weiterbildung wird das in der Abluft befindliche Wasser durch Abkühlung und Kondensation, vorzugsweise in einem Wärmetauscher, abgeschieden. Die den Behälter verlassende Abluft kann bei dem Erreichen des Wärmetauschers eine Temperatur von beispielsweise 45° C bis 80° C haben. Die Abluft wird abgekühlt, beispielsweise in einem Wärmetauscher, um das darin befindliche Wasser, das in dem Behälter beim Rottevorgang entstanden ist, durch Kondensation zu entfernen. Die derart von dem darin befindlichen Wasser befreite Abluft wird dann dem Behälter erneut zugeführt. Sie kann dann eine Temperatur von beispielsweise 20° C haben. Es ist möglich, das Ausmaß der Abkühlung der Abluft zu beeinflussen, beispielsweise durch eine entsprechende Steuerung des Wärmetauschers. Hierdurch kann die Temperatur in dem Behälter (Reaktor) beeinflußt werden. Wenn die Abluft in dem Wärmetauscher weniger gekühlt wird, gelangt sie mit einer höheren Temperatur wieder in den Behälter zurück, wodurch die Temperatur in dem Behälter und in dem Rottegut ansteigt bzw. weniger absinkt. Wenn umgekehrt die Abluft stärker gekühlt wird, kommt sie mit einer geringeren Temperatur in den Behälter zurück, wodurch die Temperatur in dem Behälter bzw. in dem Rottegut abgesenkt bzw. weniger gesteigert wird.

Statt dessen oder zusätzlich kann die Temperatur in dem Behälter bzw. in dem Rottegut durch die pro Zeiteinheit umgewälzte Gasmenge beeinflußt bzw. gesteuert werden. Wenn die pro Zeiteinheit umgewälzte Gasmenge gesteigert wird, findet in dem Rottegut eine größere Abkühlung statt. Wenn umgekehrt die pro Zeiteinheit umgewälzte Gasmenge vermindert wird, findet in dem Rottegut eine Temperatursteigerung statt.

Wenn das noch zu verrottende Rottegut (Substrat) nach einer bestimmten Zeit von beispielsweise etwa sieben Tagen zur Neige geht, wenn also nur noch verhältnismäßig wenig zu kompostierendes Rottegut vorhanden ist, sinkt die in dem Rottegut pro Zeiteinheit erzeugte Wärmemenge ab. Dies führt dazu, daß auch die Temperatur des Rotteguts absinkt. Um die bevorzugte Temperatur von mindestens 60° C bzw. von 60° C bis 80° C aufrechterhalten zu können, können die oben erläuterten Maßnahmen - einzeln oder zusammen - durchgeführt werden. Es ist also möglich, die Abluft weniger zu kühlen und/oder die pro Zeiteinheit umgewälzte Gasmenge herabzusetzen.

Der Zeitpunkt, zu dem das zu kompostierende Substrat in der beschriebenen Weise zur Neige geht, ist dabei derjenige Zeitpunkt, bei dem die biologisch leichter zersetzbaren organischen Bestandteile der Abfälle im Sinne der DE-PS 36 37 393 abgebaut worden sind.

Nach einer weiteren vorteilhaften Weiterbildung wird aus der in der Abluft enthaltenen Wärme Energie erzeugt, vorzugsweise elektrische Energie. Vorzugsweise wird dabei die bei der Kondensation des in der Abluft enthaltenen Wassers freiwerdende Wärme genutzt. Diese Wärme kann vorzugsweise über einen Wärmetauscher an ein anderes Medium übergeben werden, welches seinerseits eine Kraftmaschine antreiben kann. Diese Kraftmaschine kann elektrischen Strom erzeugen. Durch das erfindungsgemäße Verfahren ist es erstmals möglich geworden, bei der biologischen Kompostierung so viel Wärme zu erzeugen, daß diese dann auch zur Erzeugung mechanischer Energie genutzt werden kann. Entscheidend hierfür ist nicht nur die erzeugte Wärmemenge, sondern auch das Temperaturprofil, also der Temperaturunterschied, der zur Verfügung steht. Wenn das Rottegut eine Temperatur von 60° C bis 80° C hat, steht bei einer Umgebungstemperatur von 20° C ein Temperaturgefälle von 40° C bis 60° C zur Verfügung. Die gewinnbare elektrische Energie reicht aus, um die für die Umluftführung erforderlichen Gebläse anzutreiben. Die darüber hinaus noch erzeugte Energie kann anderen Zwecken zugeführt werden. Vorzugsweise wird diese überschüssige elektrische Energie dazu verwendet, aus der Luft Sauerstoff zu erzeugen. Dieser Sauerstoff wird vorzugsweise dem Rottegut als reiner Sauerstoff zugeführt.

Eine weitere vorteilhafte Weiterbildung ist dadurch gekennzeichnet, daß die Menge des pro Zeiteinheit zugeführten Sauerstoffs erhöht wird, wenn der CO₂-Gehalt in der Abluft bzw. in der Umluft bzw. in den umgewälzten Gasen ansteigt. Wie bereits ausgeführt, erhöht sich im Lauf der Zeit der CO₂-Gehalt in der Abluft bzw. Umluft, da das CO₂ nicht abgeschieden wird. Zur Kompensation dieses höher werdenden CO₂-Gehalts wird die Menge des zugeführten Sauerstoffs gesteigert. Vorzugsweise geschieht dies proportional zur Anreicherung des CO₂-Gehalts in dem umgewälzten Gas. Vorzugsweise wird also die Menge des pro Zeiteinheit zugeführten Sauerstoffs in dem selben Maß gesteigert, wie der CO₂-Gehalt in dem umgewälzten Gas zunimmt.

Nach der Reaktionsgleichung C₆H₁₂O₆ + 6O₂ = 6CO₂ + 6H₂O + 674 kcal wird der zugeführte Sauerstoff zur Hälfte dazu verwendet, Wasser zu erzeugen, zur anderen Hälfte dazu, CO₂ zu erzeugen. Das Wasser wird abgeschieden. Das entstehende CO₂ wird in dem umgewälzten Gas angereichert. Hierdurch, also durch die Erhöhung der Masse in dem geschlossenen System, erhöht sich auch der Druck in diesem geschlossenen System. Demtentsprechend kann die Leistung der die Umluftführung erzeugenden Ventilatoren gesteigert werden, um die pro Zeiteinheit umgewälzte Gasmenge konstant zu halten. Dies gilt allerdings nur dann, wenn das geschlossene System hinreichend dicht ist. Es ist möglich, daß geringfügige Undichtigkeiten vorhanden sind, die eine Druckerhöhung in dem geschlossenen System verhindern, so daß die Ventilatorleistung gleich bleiben kann.

Durch die Erfindung wird die Effektivität des Verfahrens erheblich gesteigert. Diese Effektivitätssteigerung geht letztlich darauf zurück, daß der biologische Energiefreisetzungsprozeß, der bisher eine verhältnismäßig große Zeit in Anspruch genommen hat, in einer wesentlich kürzeren Zeitspanne (die nur noch 1/4 bis 1/3 der bisher erforderlichen Zeitspanne beträgt) durchgeführt werden kann. Dadurch wird die Leistung (Kompostierungsleistung), nämlich die pro Zeiteinheit kompostierte Menge, wesentlich größer. Ferner wird auch die pro Zeiteinheit nutzbare Energiefreisetzung, die in der oben beschriebenen Weise zur Energieerzeugung dienen kann, also die Leistung (nutzbare Energie pro Zeit) wesentlich größer und damit wirtschaftlich interessant.

Eine weitere vorteilhafte Weiterbildung ist dadurch gekennzeichnet, daß die Abluft nicht gefiltert wird. Hierdurch wird der bisher damit verbundene Aufwand vermieden. Der Verzicht auf die Abluftfilterung ist möglich, da die Abluft kontinuierlich und vollständig im Kreislauf geführt wird, so daß keine das System verlassende Abluft, die gefiltert werden müßte, vorhanden ist.

Vorteilhaft ist es, wenn die Abluft durch ein Wasserbad geleitet wird. Hierbei kann es sich um das Kondensat handeln. Ferner kann vorzugsweise die von der Abluft an das Wasserbad abgegebene Wärme genutzt werden, beispielsweise dadurch, daß diese Wärme an einen Wärmetauscher abgegeben wird. Dadurch, daß die Abluft durch ein Wasserbad geleitet wird, kann das in der Abluft vorhandene Wasser auf besonders einfache und effektive Weise aus der Abluft entfernt werden. Durch diesen Vorgang kühlt die Abluft ab, und das Wasser kondensiert aus. Die Anordnung kann dabei derart getroffen sein, daß das Wasserbad stets in gleicher Menge vorhanden bleibt. Beispielsweise kann das Wasserbad als Wassertank realisiert sein, der stets den gleichen Pegel hat. Dies kann auf einfache Weise dadurch realisiert werden, daß in dem Tank ein Überlauf vorhanden ist und daß das Überlaufwasser herausgeleitet wird.

Die vom Wasserbad bzw. Wassertank aufgenommene Wärme kann abgeführt werden, beispielsweise über eine Kreislaufführung mit Wärmetauscher und/oder Kühlaggregat.

Nach einer weiteren vorteilhaften Weiterbildung wird die Abluft vor der Beendigung des Rottevorgangs gereinigt. Nach der Beendigung des Rottevorgangs wird der geschlossene Behälter geöffnet, und das darin befindliche, zumindest teilweise kompostierte Rottegut wird aus dem Behälter entfernt. Unmittelbar vorher kann die Abluft bzw. der Luftinhalt des geschlossenen Behälters gereinigt werden, um ein Austreten der Abluft in die Atmosphäre zu verhindern. Insbesondere kann im Rahmen dieser Reinigung das CO₂ aus der Luft entfernt werden, um zu verhindern, daß es nach der Öffnung des geschlossenen Behälters in die Umwelt entweicht. Die Entfernung des CO₂ kann in einem Wasserbad mit Kalziumoxid (CaO) oder Kalziumhydroxid (CaOH) erfolgen. Im Rahmen der Reinigung kann auch Ammoniak entfernt werden, beispielsweise in einem Wasserbad mit Kalzium-Hydrogen-Karbonat oder Kalzium-Hydrogen-Phosphat. Die Entfernung von Ammoniak kann nicht nur unmittelbar vor der Beendigung des Rottevorgangs durchgeführt werden, sondern auch während des gesamten Rotteprozesses.

Eine Vorrichtung zur Durchführung des erfindungsgemäßen Verfahrens besteht aus einem geschlossenen Behälter mit einer Luftzufuhreinrichtung und einer Luftabfuhreinrichtung, durch welche die Abluft dem Behälter erneut zugeführt wird. Ferner ist eine Zwangsbelüftungseinrichtung vorhanden, die die Abluft erneut dem geschlossenen Behälter zuführt. Es kann auch noch eine Sauerstoffzufuhreinrichtung vorhanden sein zur Zuführung von Sauerstoff bzw. reinem Sauerstoff sowie eine Wasserabfuhreinrichtung zum Abführen des aus der Abluft entfernten Wassers.

Zur Lösung der oben angegebenen Aufgabe ist eine derartige Vorrichtung erfindungsgemäß dadurch gekennzeichnet, daß kein Abluftfilter vorgesehen ist. Da die Abluft vollständig im Kreislauf geführt wird, ist keine das System verlassende Abluft vorhanden, so daß auch kein Abluftfilter benötigt wird.

Eine vorteilhafte Weiterbildung der erfindungsgemäßen Vorrichtung ist dadurch gekennzeichnet, daß in der Luftabfuhreinrichtung ein Wasserbad vorgesehen ist, durch das die Abluft durchleitbar ist. Das Wasserbad bzw. der Wassertank wird vorzugsweise durch das Kondensat gespeist, also durch das aus der Abluft entfernte Wasser. Der Wassertank kann einen Überlauf haben, so daß in ihm stets der gleiche Wasserpegel aufrechterhalten wird und das Überlaufwasser stets abgeführt werden kann.

Eine weitere vorteilhafte Weiterbildung ist gekennzeichnet durch einen Wärmetauscher zum Abführen der von der Abluft an das Wasserbad abgegebenen Wärme.

Während des Betriebs findet in dem System eine Druckänderung praktisch nicht statt. Zwar wird dem System ständig reiner Sauerstoff zugeführt. Es wird aber auch ständig Wasser abgeführt, so daß das Gesamtvolumen des Systems im wesentlichen gleich bleibt und sich der Druck praktisch nicht ändert.

## Patentansprüche

1. Verfahren zur Kompostierung, bei dem das Rottegut in einen geschlossenen Behälter eingebracht wird und unter Zuführung von Sauerstoff mikrobiell abgebaut wird, wobei ferner dem Rottegut ein Gemisch aus reinem Sauerstoff und Abluft zugeführt wird,
dadurch gekennzeichnet,
daß das in der Abluft befindliche CO₂ dem Rottegut erneut zugeführt wird
und daß aus der aus dem Rottegut austretenden Abluft das darin befindliche Wasser durch Abkühlung und Kondensation abgeschieden wird.

2. Verfahren nach Anspruch 1, dadurch gekennzeichnet, daß die aus dem Rottegut austretende Abluft dem Rottegut im wesentlichen wieder zugeführt wird.

3. Verfahren nach Anspruch 1 oder 2, dadurch gekennzeichnet, daß die aus dem Rottegut austretende Abluft dem Rottegut kontinuierlich wieder zugeführt wird.

4. Verfahren nach einem der vorhergehenden Ansprüche, dadurch gekennzeichnet, daß die pro Zeiteinheit umgewälzte Gasmenge gesteigert wird, wenn die Temperatur im Rottegut ansteigt.

5. Verfahren nach einem der Ansprüche 1 bis 3, dadurch gekennzeichnet, daß die pro Zeiteinheit umgewälzte Gasmenge vermindert wird, wenn die Temperatur in dem Rottegut absinkt.

6. Verfahren nach einem der vorhergehenden Ansprüche, dadurch gekennzeichnet, daß der Feuchtigkeitsgehalt in dem umgewälzten Gas auf einem bestimmten vorgegebenen Wert konstant gehalten wird.

7. Verfahren nach einem der vorhergehenden Ansprüche, dadurch gekennzeichnet, daß die Temperatur in dem Behälter mindestens 60° C beträgt.

8. Verfahren nach einem der vorhergehenden Ansprüche, dadurch gekennzeichnet, daß das in der Abluft befindliche Wasser durch Abkühlung und Kondensation, in einem Wärmetauscher abgeschieden wird.

9. Verfahren nach Anspruch 8, dadurch gekennzeichnet, daß aus der bei der Kondensation abgegebenen Wärme elektrische Energie erzeugt wird.

10. Verfahren nach einem der vorhergehenden Ansprüche, dadurch gekennzeichnet, daß die Menge des pro Zeiteinheit zugeführten Sauerstoffs erhöht wird, wenn der CO₂-Gehalt ansteigt.

11. Verfahren nach einem der vorhergehenden Ansprüche, dadurch gekennzeichnet, daß die Abluft nicht gesondert gefiltert wird.

12. Verfahren nach einem der vorhergehenden Ansprüche, dadurch gekennzeichnet, daß die Abluft durch ein Wasserbad geleitet wird.

13. Verfahren nach Anspruch 12, dadurch gekennzeichnet, daß die Abluft durch das Kondensat geleitet wird.

14. Verfahren nach Anspruch 12 oder 13, dadurch gekennzeichnet, daß die von der Abluft an das Wasserbad abgegebene Wärme an einen Wärmetauscher abgegeben wird.

15. Verfahren nach einem der vorhergehenden Ansprüche, dadurch gekennzeichnet, daß die Abluft vor Beendigung des Rottevorgangs gereinigt wird.

## Claims

1. Process of composting, in which the material undergoing biodegradation is introduced into a sealed container and subjected to microbial biodegradation while passing in oxygen, during which process a mixture of pure oxygen and outgoing air is furthermore passed to the material undergoing biodegradation, characterized in that the CO₂ which forms part of the outgoing air is returned to the material undergoing biodegradation and that the water which forms part of the outgoing air that escapes from the material undergoing biodegradation is separated off by means of cooling and condensation.

2. Process according to Claim 1, characterized in that the outgoing air which escapes from the material undergoing biodegradation is essentially returned to the material undergoing biodegradation.

3. Process according to Claim 1 or 2, characterized in that the outgoing air which escapes from the material undergoing biodegradation is returned continuously to the material undergoing biodegradation.

4. Process according to any of the preceding claims, characterized in that the amount of gas recirculated per unit time is increased when the temperature in the material undergoing biodegradation rises.

5. Process according to any of Claims 1 to 3, characterized in that the amount of gas circulated per unit time is reduced when the temperature in the material undergoing biodegradation drops.

6. Process according to any of the preceding claims, characterized in that the moisture content in the gas circulated is kept constant at a particular set value.

7. Process according to any of the preceding claims, characterized in that the temperature in the container is at least 60°C.

8. Process according to any of the preceding claims, characterized in that the water which forms part of the outgoing air is separated off in a heat exchanger by means of cooling and condensation.

9. Process according to Claim 8, characterized in that electrical energy is generated from the heat conveyed during condensation.

10. Process according to any of the preceding claims, characterized in that the amount of oxygen passed in per unit time is increased when the CO₂ content rises.

11. Process according to any of the preceding claims, characterized in that the outgoing air is not filtered in a separate step.

12. Process according to any of the preceding claims, characterized in that the outgoing air is passed through a water bath.

13. Process according to Claim 12, characterized in that the outgoing air is passed through the condensate.

14. Process according to Claim 12 or 13, characterized in that the heat conveyed by the outgoing air to the water bath is conveyed to a heat exchanger.

15. Process according to any of the preceding claims, characterized in that the outgoing air is cleaned before the biodegradation process is complete.

## Revendications

1. Procédé pour le compostage, dans lequel la matière en pourrissage est introduite dans un récipient fermé et est décomposée par voie microbienne avec amenée d'oxygène, et de plus, a la matière en pourrissage est amené un mélange d'oxygène pur et d'air d'échappement,
caractérisé en ce que
CO₂ se trouvant dans l'air d'échappement est reconduit à la matière en pourrissage
et en ce que de l'air d'échappement sortant de la matière en pourrissage, l'eau qui s'y trouve est séparée par refroidissement et condensation.

2. Procédé selon la revendication 1, caractérisé en ce que l'air d'échappement sortant de la matière en pourrissage est essentiellement reconduit a la matière en pourrissage.

3. Procédé selon la revendication 1 ou 2, caractérisé en ce que l'air d'échappement sortant de la matière en pourrissage est continuellement reconduit à la matière en pourrissage.

4. Procédé selon l'une quelconque des revendications précédentes, caractérisé en ce que la quantité de gaz en circulation par unité de temps est augmentée quand la température dans la matière en pourrissage augmente.

5. Procédé selon l'une quelconque des revendications 1 à 3, caractérisé en ce que la quantité de gaz en circulation par unité de temps est diminuée quand la température dans la matière en pourrissage baisse.

6. Procédé selon l'une quelconque des revendications précédentes, caractérisé en ce que la teneur en humidité dans le gaz en circulation est maintenue constante a une certaine valeur prédéterminée.

7. Procédé selon l'une quelconque des revendications précédentes, caractérisé en ce que la température dans le récipient est d'au moins 60°C.

8. Procédé selon l'une quelconque des revendications précédentes, caractérisé en ce que l'eau se trouvant dans l'air d'échappement est séparée par refroidissement et condensation dans un échangeur de chaleur.

9. Procédé selon la revendication 8, caractérisé qu'a partir de la chaleur donnée par la condensation, on produit de l'énergie électrique.

10. Procédé selon l'une quelconque des revendications précédentes, caractérisé en ce que la quantité d'oxygène conduit par unité de temps est augmentée quand la teneur en CO₂ augmente.

11. Procédé selon l'une quelconque des revendications précédentes, caractérisé en ce que l'air d'échappement n'est pas spécialement filtré.

12. Procédé selon l'une quelconque des revendications précédentes, caractérisé en ce que l'air d'échappement est conduit à travers un bain d'eau.

13. Procédé selon la revendication 12, caractérisé en ce que l'air d'échappement est conduit à travers le condensat.

14. Procédé selon la revendication 12 ou 13, caractérisé en ce que la chaleur donnée par l'air d'échappement au bain d'eau est donnée à un échangeur de chaleur.

15. Procédé selon l'une quelconque des revendications précédentes, caractérisé en ce que l'air d'échappement est purifié avant la fin du processus de pourrissage.
